# EUROPEAN PATENT SPECIFICATION

(11) **EP 4 269 196 B1**
(45) Date of publication and mention of the grant of the patent: **27.03.2024**
(21) Application number: 22170837.3
(22) Date of filing: 29.04.2022
(51) Int. Cl.: B60T 13/569, B60T 17/08

(54) **A SPRING BRAKE ACTUATOR, A PNEUMATIC BRAKE ARRANGEMENT, A VEHICLE, IN PARTICULAR UTILITY VEHICLE AND A METHOD OF MOUNTING A SPRING BRAKE ACTUATOR**
FEDERSPEICHERBREMSZYLINDER, PNEUMATISCHE BREMSANORDNUNG, FAHRZEUG, INSBESONDERE NUTZFAHRZEUG UND VERFAHREN ZUM MONTIEREN EINES FEDERSPEICHERBREMSZYLINDERS
ACTIONNEUR DE FREIN À RESSORT, AGENCEMENT DE FREIN PNEUMATIQUE, VÉHICULE, EN PARTICULIER VÉHICULE UTILITAIRE ET PROCÉDÉ DE MONTAGE D'UN ACTIONNEUR DE FREIN À RESSORT

(43) Date of publication of application: 01.11.2023
(73) Proprietor: ZF CV Systems Europe BV, 1170 Brüssel (BE)
(72) Inventor: STRZALA, Wieslaw, 46-220 Byczyna (PL)
(74) Representative: Ohlendorf, Henrike

(56) References cited:
- EP-A1- 3 831 677
- EP-B1- 2 404 799
- GB-A- 2 088 525

## Description

The present invention relates to a spring brake actuator for a vehicle, in particular a utility vehicle. The invention also relates to a pneumatic brake arrangement for a vehicle, in particular a utility vehicle, to a vehicle, in particular to a utility vehicle, and to a method of mounting a spring brake actuator.

Braking systems, such as air brake systems, are used to control the movement of vehicles, in particular utility vehicles, in a safe and effective manner. In particular, pneumatic brakes are used on utility vehicles such as trucks, trailers, and buses, which typically have large gross vehicle weights. The inertial mass of these vehicles, in combination with the speeds at which they might travel, requires a braking arrangement which responds rapidly with appropriate braking power. One system component of a pneumatic brake arrangement is a brake actuator. The brake actuator typically provides the necessary force when braking the vehicle.

Typically, a spring brake actuator comprises a service brake part and parking brake part. In a diaphragm type spring brake actuator, two air-operated diaphragm brake actuators are typically arranged in a tandem configuration, which includes an air-operated service brake actuator for applying the normal operating brakes, and a spring brake actuator for applying the parking or emergency brakes. Both the service brake actuator and the spring brake actuator include a housing having an elastomeric diaphragm dividing the interior of the housing into two distinct fluid chambers. Alternative to the diaphragm type spring actuator, a spring brake actuator comprises a piston in the parking brake part instead of the diaphragm.

The spring brake actuator comprises the housing, the diaphragm to form a pressure chamber and a non-pressure chamber, also called a pushrod chamber, in the housing, a pushrod, a pushrod plate connected with the pushrod and being arranged in the pushrod chamber. The spring brake actuator further comprises a boot, a return spring, and a spring seat. The pressure chamber is fluidly connected to a source of pressurized air and the non-pressure chamber mounts the pushrod, which is couplable to the brake arrangement. Therein, the introduction and exhaustion of pressurized air into the pressure chamber reciprocates the pushrod into and out of the spring brake actuator along an axis to apply and release the operating brakes.

When the actuator pushrod is not attached to the diaphragm, the pushrod may change its position due to sliding and/or turning which can lead to unwanted consequences. The state of art solution suggests a diaphragm with a cylindrically shaped pin which prevents pushrod sliding, but does not prevent pushrod turning. The cylindrically shaped pin fits into a round cavity in the pushrod plate. The pin prevents the pushrod plate and pushrod from sliding. However, since the round pin comprises a cylindrical shape, it does not prevent turning of the pushrod plate and pushrod around the axis.

Such turning can lead, e.g., to boot twisting. To prevent turning, i.e., rotation of the pushrod plate relative to the diaphragm, there are known solutions. EP 2 404 799 B1 suggests that the diaphragm is glued to the pushrod plate and GB 2088525 A suggests that a round pin is press fitted in the pushrod plate. Each of the solutions prevents a rotation as the pushrod and the diaphragm are fixedly mounted to each other.

EP 2 404 799 B1 discloses an adhesive attachment of a disc brake push rod plate to a diaphragm. Therein, a brake diaphragm has a projecting rim for engaging a housing containing a piston, a bottom wall having an interior surface for engaging the piston, and a sidewall connecting the projecting rim with the bottom wall. An adhesive is placed between on the diaphragm such that when the push rod plate engages the diaphragm, an adhesive seal is created between the push rod plate and the diaphragm. During operation of the brake by the spring brake actuator, the adhesive maintains a constant attachment between the push rod plate and the diaphragm, keeping both in line with each other. As a result, brake operating is not impaired by a misaligned push rod plate and diaphragm.

However, due to gluing an additional gluing operation is necessary to manufacture the spring brake actuator. Furthermore, the manufacture requires curing time. The pushrod and diaphragm cannot be disassembled after gluing.

GB 2088525 A discloses a diaphragm-pressure plate connection in a fluid pressure actuator. Therein, there is disclosed a fluid pressure responsive diaphragm which divides the housing into two chambers, one chamber having a port for the application of control pressure and said diaphragm acting against a pressure plate in the other chamber for applying a force to an output member said diaphragm having moulded therewith means for engaging with said pressure plate to provide mutual relative lateral positioning thereof. The centre of the pressure plate is provided with a blind hole and the centre of the diaphragm is provided with an integrally moulded projection which affords a press fit within the blind hole.

The press fit connection between the pushrod plate and pin implies a more difficult assembly and disassembly.

It is an object of the present invention to improve the spring brake actuator of the prior art and to enable an efficient assembly and disassembled without requiring additional components such as glue.

The object is solved by spring brake actuator according to independent claim 1 and by the subject-matter according to the remaining independent claims. Dependent claims relate to preferred embodiments.

According to the invention, a spring brake actuator for a vehicle, in particular a utility vehicle, is provided. The spring brake actuator comprises a housing, a diaphragm arranged to form a pressure chamber and a non-pressure chamber in the housing, a pushrod plate being arranged in the non-pressure chamber, and a pushrod adapted to couple to an external member of a brake arrangement, wherein the diaphragm comprises a projection, and the pushrod plate comprises a hole adapted to engage with the projection, wherein the projection comprises non-circular projection cross-section and the hole comprises a non-circular hole cross-section.

Each of the projection and the hole comprises a non-cylindrical shape due to the non-circular cross-section. Due to the non-cylindrical shape, a rotation of the pushrod plate relative to the diaphragm is prevented. The invention overcomes the above-described difficulty of assembly and/or disassembly and does not require additional parts such as a gluing agent. Thereby, a curing time during the manufacture of the spring brake actuator can be dispensed with. The projection and the hole are efficiently engageable with each other in a reversible manner. Thus, the assembly is efficient as a pressing force for a press fit connection can be dispensed with and a gluing can be dispensed with. The facilitates the manufacture of the spring brake actuator. As the pushrod plate and the diaphragm are mounted to each other without press fitting and/or gluing, the pushrod plate and the diaphragm may efficiently be disassembled, e.g., for maintenance and/or service.

In other words, the projection, also called protrusion, on the diaphragm is in a shape that differs from the shape of a solid of revolution. The hole, also called cavity, in the pushrod plate is in a corresponding shape which also differs from a shape of a solid of revolution. The projection and the hole together create a connection between the pushrod plate and the diaphragm, which position is fixed, and prevent the pushrod plate and the pushrod not only from sliding but also from turning, i.e., rotating.

Preferably, the hole and the projection are adapted to engage with each other in a form-locking manner. I.e., the hole and the projection are connectable by a clearance fit and/or a transition fit, wherein the projection is inserted into the hole. This embodiment enables an effective manufacture and/or disassembly of the spring brake actuator while preventing pushrod rotation reliably.

Preferably, each of the projection cross-section and the hole cross-section comprise the same shape. This embodiment enables an improved exertion of torques between the projection and the hole, since the contacting surface between the projection and the hole is increased and/or maximized. This may reduce wear of the projection and/or the hole while preventing pushrod rotation reliably. Alternatively, the projection cross-section and the hole cross-section comprise the different shapes, e.g., the hole cross-section may comprise a square shape and the projection cross-section may comprise an octagonal shape, wherein the hole cross-section and the projection cross-section may have the same apothem, i.e., the distance from a center of the respective cross-section to the midpoint of one of its sides.

Preferably, the projection cross-section and/or the hole cross-section comprises an oval or a polygonal shape. This embodiment provides possible projection cross-sections and/or hole cross-sections with a noncircular cross-section. Thus, a projection, and/or a hole with the oval- or the polygonal-shaped cross-section are examples of a projection and/or a hole with a shape that differs from the shape of a solid of revolution.

Preferably, the projection cross-section and/or the hole cross-section comprises a discrete symmetry. Therein, the discrete symmetry means that the projection cross-section and/or the hole cross-section may be rotated by one or more specific angles while enabling engaging the projection with the hole. E.g., a triangular cross-section may be rotated by an angle of 120 °, 240 ° or 360 ° without changing the overall shape. I.e., the triangle comprises a 3-fold symmetry. Similarly, an elliptic cross-section may be rotated by an angle of 180 ° or 360 ° without changing the overall shape. I.e., the elliptic cross-section comprises a 2-fold symmetry. This embodiment facilitates manufacture of the spring brake actuator since the pushrod plate and the diaphragm may be engaged with each other in different ways, i.e., with different relative orientations.

Preferably, the projection cross-section and/or the hole cross-section comprises an elliptic or regular polygonal shape. In this embodiment, the projection and/or the hole comprises a shape that differs from the shape of the solid of revolution and comprises a discrete symmetry. Therein, an elliptically shaped projection cross-section and/or hole cross-section comprises a 2-fold symmetry. The projection cross-section and/or hole cross-section with a shape of an n-sided regular polygon comprises an n-fold symmetry. E.g., a three-sided regular polygon is a triangle which comprises a 3-fold symmetry, a four-sided regular polygon is a square which comprises a 4-fold symmetry, a six-sided regular portable is a hexagon which comprises a 6-fold symmetry.

According to another aspect of the invention a pneumatic brake arrangement for a vehicle, in particular a utility vehicle, is provided. The pneumatic brake arrangement comprises a spring brake actuator as described above. Therein, the spring brake actuator may comprise the preferred and/or optional features as described herein to achieve a corresponding technical effect.

According to another aspect of the invention a vehicle, in particular a utility vehicle, is provided. The vehicle, in particular utility vehicle comprises a spring brake actuator as described above and/or a pneumatic brake arrangement as described herein. Therein, the spring brake actuator may comprise the preferred and/or optional features as described herein to achieve a corresponding technical effect.

According to another aspect of the invention a method of mounting the spring brake actuator as described herein is provided. The method comprises the steps of: providing the housing, the diaphragm, the pushrod plate, comprising the hole, and the diaphragm, comprising the projection, wherein the projection comprises non-circular projection cross-section and the hole comprises a non-circular hole cross-section; arranging the diaphragm to form the pressure chamber and the non-pressure chamber in the housing; arranging the pushrod plate in the non-pressure chamber; engaging the hole with the projection. The method is not limited by the order of the specified method steps. The order of the method steps may vary. Preferably, the hole and the projection are engaged with each other in a form-locking manner. Therein, the spring brake actuator may comprise the preferred and/or optional features as described herein to achieve a corresponding technical effect.

Further advantages and technical features and their technical effects are disclosed in the figures and the description thereof.

The figures show preferred embodiments as follows:
Fig. 1 different views of a spring brake actuator according to an embodiment of the invention;
Fig. 2 a perspective view of a diaphragm and of a pushrod plate according to the prior art;
Fig. 3 a diaphragm, a pushrod plate and an arrangement of the diaphragm and the pushrod plate for a spring brake actuator according to an embodiment of the invention;
Fig. 4 an arrangement of a diaphragm and a pushrod plate for a spring brake actuator according to another embodiment of the invention;
Fig. 5 an arrangement of a diaphragm and a pushrod plate for a spring brake actuator according to another embodiment of the invention;
Fig. 6 a schematic of a brake arrangement according to an embodiment of the invention; and
Fig. 7 a schematic of a vehicle, in particular a utility vehicle, according to an embodiment of the invention.

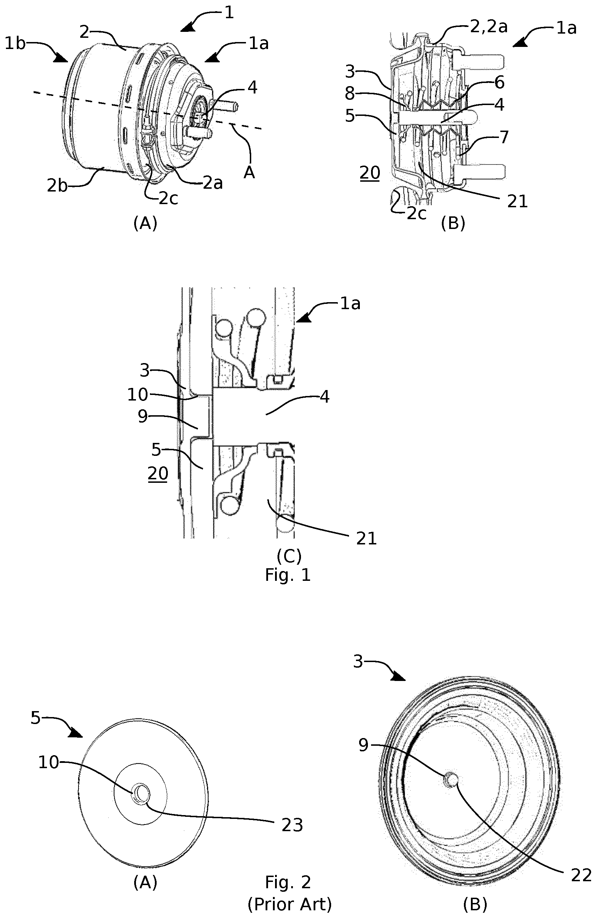

Figure 1 shows different views of a spring brake actuator 10 according to the invention. Therein Figure 1 shows a perspective view of a spring brake actuator 10 in the mounted state in Figure 1 (A), a sectional view of a service part 1a of the spring brake actuator 1 in Figure 1 (B), and a detailed sectional view of the service part 1a of the spring brake actuator 1 in Figure 1 (C).

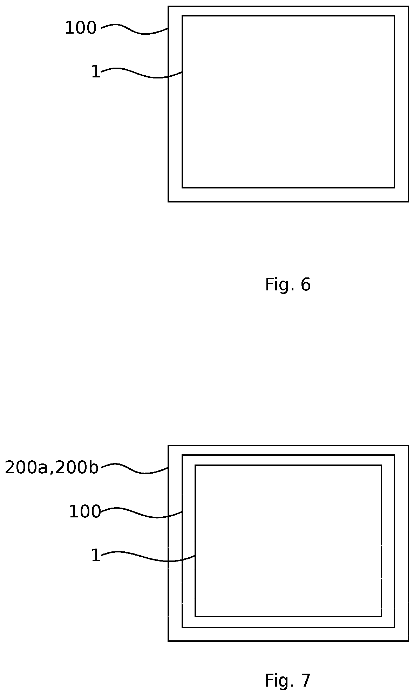

The spring brake actuator 1 is an actuator for a vehicle 200a, in particular a utility vehicle 200b, as described with reference to Figure 7.

A shown in Figure 1 (A), the spring brake actuator 1 comprises a service brake part 1a, a parking brake part 1b and a housing 2. The housing 2 comprises an essentially cylindrical shape, which is elongated along an axis A. Therein, the housing 2 comprises a service brake housing part 2a and a parking brake housing part 2b. The service brake housing part 2a and the parking brake housing part 2b are separate parts of the housing 2 and each of the service brake housing part 2a and the parking brake housing part 2b is elongated along the axis A. The service brake housing part 2a and the parking brake housing part 2b are separated from each other by a housing base 2c of the housing 2. The housing base 2c is coaxially arranged with the axis A.

The spring brake actuator 1 comprises a pushrod 4 which is axially arranged, i.e., along the axis A. The pushrod 4 may be made of metal.

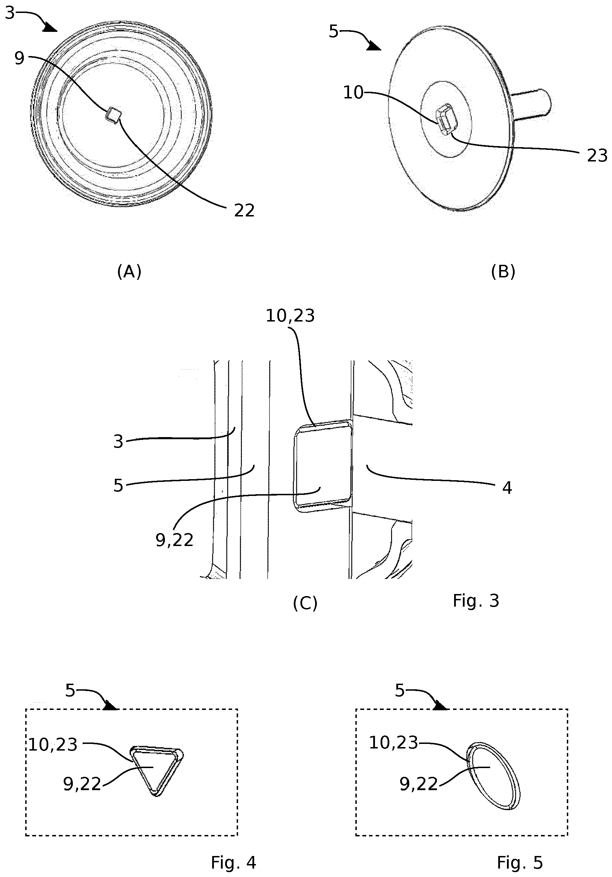

The spring brake actuator 1 comprises a pressure port (not shown) at which a pressure is applicable to actuate the spring brake actuator 1 to perform an actuation and movement of the pushrod 4 along the axis A. The pushrod 4 is adapted to couple to an external member of a brake arrangement 100 as described with reference to Figure 4, and to actuate the brake arrangement 100.

As shown in Figure 1 (B), the spring brake actuator 1 comprises a diaphragm 3. The diaphragm 3 is arranged to form a pressure chamber 20 (only schematically indicated) and a non-pressure chamber 21 in the housing 2. The non-pressure chamber 21 is also called pushrod chamber. The diaphragm 3 is fixedly coupled to the housing 2 , in particular to the housing base 2c, i.e., the diaphragm 3 is circumferentially mounted to the housing 2, e.g., clamped between the housing base 2c and the service brake housing part 2a. The diaphragm 3 is made of an elastic material to enable an elastic deformation of the diaphragm 3 upon an application of pressure in the pressure chamber 20. The diaphragm 3 may be made of rubber and/or may comprise a fiber fabric to provide a mechanical enforcement of the diaphragm 3.

The spring brake actuator 1 comprises a pushrod plate 5, a spring seat 8 and a spring 7 being arranged in the non-pressure chamber 21. The pushrod plate 5 may be made of metal and the pushrod 4 is fixedly connected to the pushrod plate 5, e.g., by welding.

Upon deformation of the diaphragm 3, the pushrod plate 5 is deflected according to the deformation of the diaphragm 3. Thus, the pushrod plate 5 deflects to pushrod 4 according to the deformation of the diaphragm 3. The pushrod plate 5 is deflected against a repulsive force which acts upon the pushrod plate 5 by virtue of the spring 7. The spring 7 is arranged between the spring seat 8 and a base surface (not indicated) of the housing 2. The spring seat 8 is an annular plate with a through hole. The spring seat 8 is optionally made of plastic. The spring seat 8 is arranged on a surface of the pushrod plate 5 so that the pushrod 4 projects through the through hole. The spring force of the spring 7 and the pushrod 4 projecting through the spring seat 8 defines the arrangement of the spring seat 8. The repulsive force of the spring 8 acts against the deformation of the diaphragm 3 and the deflection of the pushrod 4 and fixates the axial arrangement of the spring seat 8.

The spring brake actuator 1 comprises a boot 6 which is fixedly arranged with respective ends at the pushrod 4 and at the housing 2 to seal, in the mounted state, an interior of the brake arrangement 100 to which the spring brake actuator 1 is assembled.

As shown in Figure 1 (C), the diaphragm 3 comprises a projection 9, and the pushrod plate 5 comprises a hole 10 adapted to engage with the projection 9. The hole 10 is a blind hole. In a non-shown embodiment, the hole 10 is a through hole, i.e., a cut-out.

Figure 2 shows a perspective view of a diaphragm 3 and of a pushrod plate 5 according to the prior art. Figure 2 (A) and Figure 2 (B) show a diaphragm 3 and a pushrod plate 5, respectively. Specifically, a perspective view of the diaphragm 3 is shown in Figure 2 (A), and a perspective view of the pushrod plate 5 is shown in Figure 2 (B).

The projection 9 comprises a circular projection cross-section 22 and the hole 10 comprises a circular hole cross-section 23. Thus, the projection 9 and the hole 10 are engageable with each other. However, without additional measures, the circular cross-sections 22, 23 may result in a rotation of the pushrod plate 5 relative to the diaphragm 3.

Figure 3 shows a diaphragm 3, a pushrod plate 5 and an arrangement of the diaphragm 3 and the pushrod plate 5 for a spring brake actuator 1 according to an embodiment of the invention. Specifically, Figure 3 (A) shows the diaphragm 3, Figure 3 (B) shows the pushrod plate 5 and Figure 3 (C) shows the arrangement of the diaphragm 3 and the pushrod plate 5. Figure 3 is explained with reference to the description of Figure 1.

As shown in Figure 3, the projection cross-section 22 and the hole cross-section 23 comprise the same shape. Each of the projection cross-section 22 and the hole cross-section 23 comprises a polygonal shape, in particular a regular polygonal shape. The projection cross-section 22 and the hole cross-section 23 are quadratically shaped, each. Thus, each of the projection cross-section 22 and the hole cross-section 23 comprises a discrete symmetry, in particular a 4-fold symmetry, i.e., the pushrod plate 5 may be rotated relative to the diaphragm by an angle of 90 °, 180°, 270° and/or 360 ° during manufacture while the projection 9 and the hole 10 remain engageable with each other so that the projection 9 can be inserted into the hole 10.

As shown in Figure 3 (C), the hole 10 and the projection 9 are adapted to engage with each other in a form-locking manner. Thus, the projection cross-section 22 and the hole cross-section 23 are adapted so that the projection 9 is engageable with the hole 10 in a form-locking manner. I.e., the projection cross-section 22 may be smaller than the hole cross-section 23 to insert the projection 9 into the hole 10.

Figure 4 shows an arrangement of a diaphragm 5 and a pushrod plate 3 for a spring brake actuator 1 according to another embodiment of the invention. Figure 4 is described with reference to the description of Figure 3.

As shown in Figure 4, the projection cross-section 22 and the hole cross-section 23 comprise the same shape. Each of the projection cross-section 22 and the hole cross-section 23 comprises a polygonal shape, in particular a regular polygonal shape. The projection cross-section 22 and the hole cross-section 23 are shaped as a triangular, each. Thus, each of the projection cross-section 22 and the hole cross-section 23 comprises a discrete symmetry, in particular a 3-fold symmetry, i.e., the pushrod plate 5 may be rotated relative to the diaphragm by an angle of 120 °, 240° and/or 360 ° during manufacture while the projection 9 and the hole 10 remain engageable with each other so that the projection 9 can be inserted into the hole 10.

Figure 5 shows an arrangement of a diaphragm 3 and a pushrod 5 plate for a spring brake actuator 1 according to another embodiment of the invention. Figure 5 is described with reference to the description of Figure 3.

As shown in Figure 5, the projection cross-section 22 and the hole cross-section 23 comprise the same shape. Each of the projection cross-section 22 and the hole cross-section 23 comprises an oval shape, in particular an elliptic shape. Thus, each of the projection cross-section 22 and the hole cross-section 23 comprises a discrete symmetry, in particular a 2-fold symmetry, i.e., the pushrod plate 5 may be rotated relative to the diaphragm by an angle of 180 ° and/or 360 ° during manufacture while the projection 9 and the hole 10 remain engageable with each other so that the projection 9 can be inserted into the hole 10.

Figure 6 shows a schematic of a brake arrangement 100 according to an embodiment of the invention. The brake arrangement 100 is a pneumatic brake arrangement and comprises the spring brake actuator 1 as described with reference to Figures 1, 3, 4 and/or 5. The brake arrangements 100 may comprise a plurality of spring brake actuators 1 (not shown).

Figure 7 shows a schematic of a vehicle 200a, in particular a utility vehicle 200b, according to an embodiment of the invention. The vehicle 200a, in particular the utility vehicle 300b, comprises the brake arrangement 100 as described with reference to Figure 6, i.e., the vehicle 200a, in particular the utility vehicle 200b, comprises spring brake actuator 1 as described with reference to Figures 1, 3, 4 and/or 5. The vehicle 200a, in particular utility vehicle 200b, may be a truck, trailer and/or bus. The vehicle 200a, in particular utility vehicle 200b may comprise a plurality of brake arrangements 100 and/or of spring brake actuators 1 (not shown).

### List of reference signs (part of the description)

- 1: spring brake actuator
- 1a: service brake part
- 1b: parking brake part
- 2: housing
- 2a: service brake housing part
- 2b: parking brake housing part
- 2c: housing base
- 3: diaphragm
- 4: pushrod
- 5: pushrod plate
- 6: boot
- 7: spring
- 8: spring seat
- 9: projection
- 10: hole

- 22: projection cross-section
- 23: hole cross-section

- 100: brake arrangement
- 200a: vehicle
- 200b: utility vehicle

- A: axis

## Claims

1. A spring brake actuator (1) for a vehicle, in particular a utility vehicle, comprises
- a housing (2),
- a diaphragm (3) arranged to form a pressure chamber (20) and a non-pressure chamber (21) in the housing (2),
- a pushrod plate (5) being arranged in the non-pressure chamber (21), and
- a pushrod (4) adapted to couple to an external member of a brake arrangement (100), wherein
- the diaphragm (3) comprises a projection (9), and
- the pushrod plate (5) comprises a hole (10) adapted to engage with the projection (9), **characterized in that**
- the projection (9) comprises non-circular projection cross-section (22) and the hole (10) comprises a non-circular hole cross-section (23).

2. The spring brake actuator as claimed in claim 1, wherein
- the hole (10) and the projection (9) are adapted to engage with each other in a form-locking manner.

3. The spring brake actuator as claimed in any one of the preceding claims, wherein
- each of the projection cross-section (22) and the hole cross-section (23) comprise the same shape.

4. The spring brake actuator as claimed in any one of the preceding claims, wherein
- the projection cross-section (22) and/or the hole cross-section (23) comprises an oval or a polygonal shape.

5. The spring brake actuator as claimed in any one of the preceding claims, wherein
- the projection cross-section (22) and/or the hole cross-section (23) comprises a discrete symmetry.

6. The spring brake actuator as claimed in claim 5, wherein
- the projection cross-section (22) and/or the hole cross-section (23) comprises an elliptic or regular polygonal shape.

7. A pneumatic brake arrangement for a vehicle, in particular a utility vehicle, comprising a spring brake actuator as claimed in any one of the preceding claims.

8. A vehicle, in particular a utility vehicle, comprising a spring brake actuator as claimed in any one of claims 1 to 6 and/or a pneumatic brake arrangement as claimed in claim 7.

9. A method of mounting a spring brake actuator (1) as claimed in any one of claims 1 to 6, wherein the method comprises the steps of:
- providing the housing (2), the diaphragm (3), the pushrod plate (5), comprising the hole (10), and the diaphragm (3), comprising the projection (9), wherein the projection (9) comprises non-circular projection cross-section (22) and the hole (10) comprises a non-circular hole cross-section (23);
- arranging the diaphragm (3) to form the pressure chamber (20) and the non-pressure chamber (21) in the housing (2);
- arranging the pushrod plate (5) in the non-pressure chamber (21);
- engaging the hole (10) with the projection (9).

10. The method as claimed in claim 9, wherein
- the hole (10) and the projection (9) are engaged with each other in a form-locking manner.

## Patentansprüche

1. Federspeicherbremszylinder (1) für ein Fahrzeug, insbesondere ein Nutzfahrzeug, umfasst
- ein Gehäuse (2),
- eine Membran (3), die angeordnet ist, um eine Druckkammer (20) und eine Nicht-Druckkammer (21) in dem Gehäuse (2) zu bilden,
- eine Schubstangenplatte (5), die in der Nicht-Druckkammer (21) angeordnet ist, und
- eine Schubstange (4), die angepasst ist, um mit einem externen Element einer Bremsanordnung (100) zu koppeln, wobei
- die Membran (3) einen Vorsprung (9) umfasst, und
- die Schubstangenplatte (5) ein Loch (10) umfasst, das angepasst ist, um mit dem Vorsprung (9) in Eingriff zu kommen, **dadurch gekennzeichnet, dass**
- der Vorsprung (9) einen nicht kreisförmigen Vorsprungsquerschnitt (22) umfasst und das Loch (10) einen nicht kreisförmigen Lochquerschnitt (23) umfasst.

2. Federspeicherbremszylinder nach Anspruch 1, wobei
- das Loch (10) und der Vorsprung (9) angepasst sind, um miteinander formschlüssig in Eingriff zu kommen.

3. Federspeicherbremszylinder nach einem der vorstehenden Ansprüche, wobei
- jeder des Vorsprungsquerschnitts (22) und des Lochquerschnitts (23) die gleiche Form aufweisen.

4. Federspeicherbremszylinder nach einem der vorstehenden Ansprüche, wobei
- der Vorsprungsquerschnitt (22) und/oder der Lochquerschnitt (23) eine ovale oder eine polygonale Form umfasst.

5. Federspeicherbremszylinder nach einem der vorstehenden Ansprüche, wobei
- der Vorsprungsquerschnitt (22) und/oder der Lochquerschnitt (23) eine diskrete Symmetrie umfasst.

6. Federspeicherbremszylinder nach Anspruch 5, wobei
- der Vorsprungsquerschnitt (22) und/oder der Lochquerschnitt (23) eine elliptische oder regelmäßige polygonale Form umfasst.

7. Pneumatische Bremsanordnung für ein Fahrzeug, insbesondere ein Nutzfahrzeug, umfassend einen Federspeicherbremszylinder nach einem der vorstehenden Ansprüche.

8. Fahrzeug, insbesondere ein Nutzfahrzeug, umfassend einen Federspeicherbremszylinder nach einem der Ansprüche 1 bis 6 und/oder eine pneumatische Bremsanordnung nach Anspruch 7.

9. Verfahren zum Montieren eines Federspeicherbremszylinders (1) nach einem der Ansprüche 1 bis 6, wobei das Verfahren die Schritte umfasst:
- Bereitstellen des Gehäuses (2), der Membran (3), der Schubstangenplatte (5), umfassend das Loch (10), und der Membran (3), umfassend den Vorsprung (9), wobei der Vorsprung (9) einen nicht kreisförmigen Vorsprungsquerschnitt (22) umfasst und das Loch (10) einen nicht kreisförmigen Lochquerschnitt (23) umfasst;
- Anordnen der Membran (3), um die Druckkammer (20) und die Nicht-Druckkammer (21) in dem Gehäuse (2) zu bilden;
- Anordnen der Schubstangenplatte (5) in der Nicht-Druckkammer (21);
- Ineingriffbringen des Lochs (10) mit dem Vorsprung (9).

10. Verfahren nach Anspruch 9, wobei
- das Loch (10) und der Vorsprung (9) miteinander formschlüssig in Eingriff stehen.

## Revendications

1. Actionneur de freinage à ressort (1) pour un véhicule, en particulier un véhicule utilitaire, comprenant :
- un boîtier (2),
- un diaphragme (3) agencé pour former une chambre de pression (20) et une chambre de non-pression (21) dans le boîtier (2),
- une plaque de tige de poussée (5) étant agencée dans la chambre de non-pression (21), et
- une tige poussoir (4) adaptée pour s'accoupler à un élément externe d'un agencement de frein (100), dans lequel
- le diaphragme (3) comprend une saillie (9), et
- la plaque de poussoir (5) comprend un trou (10) adapté pour venir en prise avec la saillie (9), **caractérisé en ce que**
- la saillie (9) comprend une section transversale de saillie non circulaire (22) et le trou (10) comprend une section transversale non circulaire (23).

2. Actionneur de frein à ressort selon la revendication 1, dans lequel
- le trou (10) et la saillie (9) sont conçus pour venir en prise l'un avec l'autre de manière verrouillage par complémentarité de forme.

3. Actionneur de frein à ressort selon l'une quelconque des revendications précédentes, dans lequel
- chacune parmi la section transversale de projection (22) et la section transversale de trou (23) comprend la même forme.

4. Actionneur de frein à ressort selon l'une quelconque des revendications précédentes, dans lequel
- la section transversale de projection (22) et/ou la section transversale de trou (23) comprennent une forme ovale ou polygonale.

5. Actionneur de frein à ressort selon l'une quelconque des revendications précédentes, dans lequel
- la section transversale de projection (22) et/ou la section transversale de trou (23) comprennent une symétrie discrète.

6. Actionneur de frein à ressort selon la revendication 5, dans lequel
- la section transversale de projection (22) et/ou la section transversale de trou (23) comprennent une forme polygonale elliptique ou régulière.

7. Dispositif de freinage pneumatique pour un véhicule, en particulier un véhicule utilitaire, comprenant un actionneur de frein à ressort selon l'une quelconque des revendications précédentes.

8. Véhicule, en particulier un véhicule utilitaire, comprenant un actionneur de frein à ressort selon l'une quelconque des revendications 1 à 6 et/ou un agencement de frein pneumatique selon la revendication 7.

9. Procédé de montage d'un actionneur de frein à ressort (1) selon l'une quelconque des revendications 1 à 6, dans lequel le procédé comprend les étapes consistant à :
- fournir le boîtier (2), le diaphragme (3), la plaque de poussée (5), comprenant le trou (10), et le diaphragme (3), comprenant la saillie (9), dans lequel la saillie (9) comprend une section transversale de saillie non circulaire (22) et le trou (10) comprend une section transversale de trou non circulaire (23) ;
- agencer le diaphragme (3) pour former la chambre de pression (20) et la chambre de non-pression (21) dans le logement (2) ;
- agencer la plaque de tige de poussée (5) dans la chambre de non-pression (21) ;
- la mise en prise du trou (10) avec la saillie (9).

10. Procédé selon la revendication 9, dans lequel
- le trou (10) et la saillie (9) sont en prise l'un avec l'autre de manière verrouillage par complémentarité de forme.
